# EUROPEAN PATENT APPLICATION

(11) **EP 4 545 483 A1**
(43) Date of publication of application: **30.04.2025**
(21) Application number: 23205687.9
(22) Date of filing: 25.10.2023
(51) Int. Cl.: C01G 53/00, H01M 4/505, H01M 4/525

(54) **SI MODIFIED SPINEL LNMO CATHODE MATERIAL**

(71) Applicant: Zentrum für Sonnenenergie- und Wasserstoff-Forschung Baden-Württemberg Gemeinnützige Stiftung, 70563 Stuttgart (DE)
(72) Inventor: NISAR, Umair, 89073 Ulm (DE); AXMANN, Peter, 89155 Erbach (DE)
(74) Representative: Ter Meer Steinmeister & Partner

(57) **Abstract**

The invention provides an LNMO particulate material that comprises secondary particles, wherein the secondary particles are composed of a multitude of crystals, and said crystals are composed of a multitude of crystallites, wherein a D₅₀ particle size of the secondary particles is between 4.0 µm and 25 µm, as measured by laser diffraction according to ISO 13320:2020, and wherein a D₅₀ particle size of the crystals is between 0.5 µm and 7.0 µm as measured by scanning electron microscope (SEM), and wherein, the LNMO particulate material is silicon modified. In other aspects, the invention further provides a process for the production of silicon modified Lithium-Nickel-Manganese-Oxide (LNMO) particulate material and a silicon modified LNMO material obtainable by the process according to the present invention.

## Description

The present invention relates to enhancing the performance of high-voltage spinel lithium nickel manganese oxide (LNMO) cathode active material in secondary lithium-ion batteries by silicon modification. Thus, it relates to a silicon modified LNMO material, such as a high-voltage spinel LNMO cathode material. The present invention further provides methods of manufacture of a silicon modified LNMO material.

### Description of the background art

The growing market for rechargeable Li-ion batteries (LIBs) for electric vehicles, renewable energy sources and consumer electronics demands the development of advanced batteries that are safe, cost-effective and have a high energy and power density. In this regard, due to their higher energy and power density capabilities, lithium-ion batteries have control over the market for portable electronic applications. Currently, the drive is towards the electrification of transportation and development of large energy storage systems (ESS) for various applications. Unfortunately, the current lithium-ion batteries still suffer from poor safety, low energy and low power density, which have seriously affected their widespread acceptance in electric vehicles.

Currently, several materials, including LiCoO₂, LiNiO₂, LiMn₂O₄, LiNi_{0.8}Co_{0.15}Al_{0.05}O₂, and LiNi_{0.8}Mn_{0.1}Co_{0.1}O₂, have been developed and used as cathode materials for lithium-ion batteries. However, these intercalation materials show severe capacity fading and have several safety concerns.

Several reasons have been proposed for this capacity fading, and safety concerns include degradation of the electrolyte at higher cutoff voltages (>4.5 V), structural instability and metal ion dissolution in the electrolyte due to HF generation. Among the developed materials for lithium-ion batteries, the high voltage spinel LiNi_{0.5}Mn_{1.5}O₄ (LNMO) is a promising cathode material owing to its high energy and power density, which results from the high theoretical capacity (~147 mAh g-1) and operating voltage (~4.7 V vs. Li⁺/Li). However, it still suffers from poor cycling performance due to the decomposition of electrolytes at a high operating voltage and temperature (>45 °C) which results due to parasitic reactions on the surface of the materials and results in a rapid fade in the capacity. To mitigate the issues related to LNMO, several approaches have been adopted by researchers, including morphology and particle size tailoring, structural disorder and lithium concentration tuning, Mn/Ni cation doping and surface modification. Surface modification has been widely accepted as a potential way to improve the performance of LNMO cathode materials.

Several material classes have been reported as coating materials, including oxides (ZrO₂, SiO₂, MgO, TiO₂, SiO₂, Al₂O₃), ionic conductors (Li₇La₃Zr₂O₁₂, Li₃xLa_{2/3- x}TiO₃, Li_{1.3}Al_{0.3}Ti_{1.7}(PO₄)₃), conductive polymers and conductive carbon. All these coatings reduce the unwanted side reaction between the electrolyte and the cathode material and hence improve the performance of these materials. Among these classes of coating materials, oxide coatings are straightforward and inexpensive and have shown promising results in improving the performance of cathode materials operating under different conditions. These oxide coatings prevent unwanted side reactions between cathode material surface and the electrolyte, which results in improved structural stability and capacity retention. Recently published reports of ZrO₂ coated on LNMO and lithium-rich oxide materials show extremely high rate performance, though the reason for such high performance is not clearly understood. Unfortunately, most of these surface modification approaches are not commercially viable for mass production, and it is difficult to control the thickness and uniformity of these coatings. Most of these coatings can also enhance the interfacial resistance, which can hinder Li-ion mobility during intercalation and deintercalation.

Thus, there is a need in the art for high-voltage cathode materials with high theoretical capacity and operating voltage, which shows improved cycling performance and capacity retention.

### Summary of the invention

These problems in the prior art have been solved in the present invention by the provision of a silicon modified Lithium-Nickel-Manganese-Oxide (LNMO) material with specific particle morphology, as described herein.

Thus, in a **first aspect** there is provided an LNMO particulate material that comprises secondary particles, wherein the secondary particles are composed of a multitude of crystals, and said crystals are composed of a multitude of crystallites, wherein a D₅₀ particle size of the secondary particles is between 4.0 µm and 25 µm, as measured by laser diffraction according to ISO 13320:2020, and wherein a D₅₀ particle size of the crystals is between 0.5 µm and 7.0 µm as measured by scanning electron microscope (SEM), and wherein, the LNMO particulate material is silicon modified.

It has further been found in the present invention that the inventive silicon modified LNMO particulate material can beneficially be used as a cathode material in Li ion batteries.

In a **second aspect,** the present invention provides a process for the production of silicon modified Lithium-Nickel-Manganese-Oxide (LNMO) particulate material, the process comprising the steps of:
(a) mixing a particulate LNMO precursor with a solution of an alkyl silicate in an organic or aqueous solvent,
(b) removing the organic or aqueous solvent to obtain a dry mixture,
(c) calcinating the mixture in an oxygen containing atmosphere at a temperature between 850°C to 1100 °C to form silicon modified LNMO particulate material.

In a third aspect, the present invention provides a silicon modified LNMO material obtainable by the process according to the present invention.

### Detailed description of the invention

### Silicon modified particulate Lithium-Nickel-Manganese-Oxide (LNMO) material

In a first aspect, the present invention provides a silicon (Si-) modified particulate Lithium-Nickel-Manganese-Oxide (LNMO) material that comprises secondary particles, wherein the secondary particles are composed of a multitude of crystals, and said crystals are composed of a multitude of crystallites. Although the present invention is described herein below with respect to Si modification of LNMO material, preferably Cobalt (Co) free LNMO material, the invention is applicable for any LNMXO cathode active spinel type material having similar crystal structure, wherein X includes one or more elements as defined herein below, and wherein X may partially replace Ni and/or Mn in the LNMO material.

The present invention achieves a Si modification of an LNMO particulate material through high-temperature synthesis using an LNMO particulate material and an organo silicate as Si-source, and will also be referred to as "silicon treatment". During this high-temperature synthesis, as described herein, Si is anticipated to act as a modifying element, resulting in a silicon phase on and/or within the LNMO particulate material, as analysed through cross-sectional SEM analysis. The silicon thus can be present as bulk dopant within the material as surface dopant, or can form a separate phase along grain boundaries, surface coating or simply as a flux, or any combination thereof. The Si modification of the present invention thus involves the incorporation of silicon (Si) into both the surface and bulk of LNMO material. Si can be present as Si-based inorganic compounds, including SiO₂ and Li₂SiO₃. Si may also be present as Li-Si-O glass like phase or as amorphous phase.

However, the treatment may also lead to silicon being present within the LNMO particle, thereby providing a silicon doping of the material. Therefore, even in case the modification may be referred to as a "surface modification", this does not exclude that the modification can also be present in the inner part of the secondary particles. In consequence, it is within the scope of the present invention that the silicon modification is not exclusively a surface modification but may also achieve a silicon doping within the secondary particles, or is segregated at the grain boundaries. Typically, the silicon modification is homogenously distributed on the surface of the particle.

The silicon modified Lithium-Nickel-Manganese-Oxide (LNMO) material of the present invention is typically a cobalt-free lithium nickel manganese mixed oxide, which may contain additional elements, such as one or more elements selected from Mg, Ca, Zn, Fe, Al, Ti, Mo, W, Ta, Zr, B, Si, Cr and Cu. These element(s) can be present in addition to the elements Ni and Mn, or can partially replace Ni and/or Mn in the LNMO material. Thus, the LNMO material of the present invention can also be defined as LNMXO material, with X being one or more elements as defined above. In this embodiment, the LNMXO material can also be defined by the following formula:
(i) LiNi_{0.5-a}XₐMn_{1.5}O₄, or
(ii) LiNi_{0.5}XₐMn_{1.5-a}O₄,
with a being from 0 to 0.1, preferably from 0.01 to 0.06.

Most preferably, the LNMO material is a high-voltage spinel LiNi_{0.5}Mn_{1.5}O₄ material. The LNMO material of the present invention is suitable for use as a cathode active material in secondary lithium-ion batteries. Scanning electron microscope (SEM) may be used to examine the morphology of the samples, and an energy-dispersive spectrometer may be used to examine the type, content, and distribution of elements in the LNMO material.

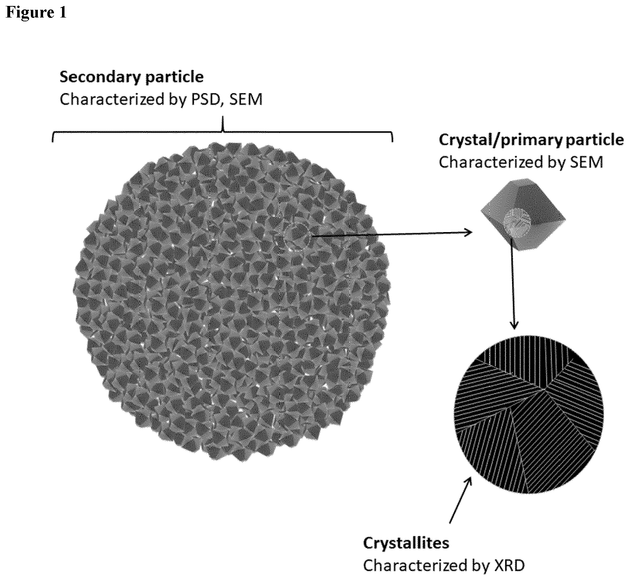

The particulate structure of the LNMO material is schematically shown in Figure 1. As shown therein, the LNMO particulate material comprises secondary particles, which are composed of a multitude of relatively smaller crystals. These crystals are composed of a multitude of crystallites.

The morphology of the secondary particles is typically spherical. Preferably, the secondary particle has a sphericity of between 1.0 and 0.80, and preferably is between 0.99 and 0.90, even more preferably between 0.98 and 0.95. The sphericity can be determined by methods well known in the art and is preferably determined from a cross-section of a secondary particle.

The D₅₀ particle size of a secondary particle is between 4.0 µm and 25 µm as measured by laser diffraction according to ISO 13320:2020, and preferably is between 5.0 and 20 µm, and further preferably is higher than 5.0 µm, 6.0 µm, 7.0 µm, 8.0 µm, 10 µm or 12 µm and further preferably is smaller than 18 µm, 16 µm or 14 µm.

The D₅₀ particle size of the crystals, which may also be referred to as "primary particles", is between 0.5 µm and 7.0 µm as measured by scanning electron microscopy (SEM), and preferably is between 1.0 and 5.0 µm, and further preferably is higher than 1.5 µm, 2.0 µm or 2.5 µm and further preferably is smaller than 6.0 µm, 5.0 µm, or 4.0 µm.

The crystallite size is between 90 nm to 400 nm, and preferably is between 160 and 300 nm, as measured by XRD Rietveld refinement (Rietveld, H. M. (1969). "A profile refinement method for nuclear and magnetic structures". Journal of Applied Crystallography. 2 (2): 65-71). XRD measurements are carried out using Bruker D8 X-ray diffraction analysis (Bruker, Germany). The crystallite shape typically is tetrahedral, octahedral and/or truncated octahedral shapes or mixed shapes. With the processes as described herein below, the crystallites of the silicon-modified LNMO can be transformed into well (truncated) octahedral shape, which enhances electrochemical performance of the material by providing more stable surfaces.

The space group of the silicon modified LNMO material is typically Fd-3m cubic phase, which is also termed as "disordered spinel" material in the art. Alternatively, the silicon modified LNMO material may also have P4₃32 space group, which is termed in the art as "ordered spinel material". Typically, small amounts of LiₓNi₁₋ₓO can be detected in both materials, which is often found in disordered LNMO materials due to nickel or oxygen deficiency. This impurity phase can be eliminated by synthesizing non-stoichiometric spinel LNMO materials. Stoichiometric spinel is commonly defined in the art as LiNi_{0.5}Mn_{1.5}O₄ (with P4₃32 space groups in XRD analysis, in the art also commonly referred to as "ordered LNMO"). Depending on the starting material and process conditions, the particulate material of the present invention can also form a non-stoichiometric composition (with Fd-3m structure in XRD analysis, commonly referred to as "disordered LNMO"). A disordered material can be defined by the following formulae:
(I) LiNi_{0.5-x}Mn_{1.5+x}O₄ (Ni-deficient)
(II) LiNi_{0.5-x}Mn_{1.5+x}O_{4-d} (Ni- and O-deficient)
(III) LiNi_{0.5}Mn_{1.5}O_{4-d} (O-deficient),
wherein d and x, independently, are typically from 0 to 0.1, and preferably from 0.01 to 0.06.

The crystal structure of the LNMO material may be analyzed by XRD measurements using Bruker D8 X-ray diffraction analysis (Bruker, Germany).

It has surprisingly been found in the present invention that a silicon treatment of an LNMO material as described herein significantly improves the stability of the material in half and full cells and further improves the cycling and capacity retention performance.

In the preferred embodiment, the silicon modification is or comprises a SiO₂ modification. Therefore, the modification comprises and preferably consists of SiO₂. Depending on the coating process, the modification may also consist of or comprise Li₂SiO₃ and/or Na₂SiO₃, or other phases or mixtures thereof. With the processes as described herein below, the Si can be dispersed uniformly on the surface of the LNMO material, leading to uniform particles with little variation in particle size and Si content between the particles.

Because SiO₂ (or, alternatively LiSiO₃ and/or NaSiO₃) is a nonconductive material, the amount of SiO₂ present on the inventive LNMO material is limited and typically is between 0.1 to 4.0 wt.%, and preferably is between 0.5 wt.% to 3.0 wt.%, based on the weight of the LNMO material. Most preferably, the amount of SiO₂ is between 0.5 and 2.0 wt.%, such as between 0.5 and 1.5 wt.%, based on the weight of the LNMO material. If the amount of SiO₂ exceed the higher limit, the material's electrical conductivity may be reduced, resulting in a decrease in the electrochemical performance of the sample after coating. If the amount of SiO₂ is lower than the lower limit, the material's cycling performance and stability may not be enhanced and the desired effects may not be achieved.

Alternatively, the amount of silicon present in the inventive LNMO material may be calculated as a molar ratio of Si to the transition metals nickel and manganese. Thus, a molar ratio of Si/(Ni+Mn) is preferably between 0.0005-0.03, and preferably between 0.0008-0.015, and further preferably is between 0.0015-0.01. Inductively coupled plasma optical emission spectrometry (ICP-OES) may be used to analyze the element content and calculate the molar ratio.

It has been surprisingly found in the present invention that the size and shape of the silicon-modified particles can be beneficially controlled with the calcination temperature and the amount of silicon present in the silicon-modified material. Since silicon increases the crystallite growth significantly, the particle size and particle morphology can be altered and controlled based on the amount of silicon. Further, it is believed that the silicon stabilizes the integrity of the particles, thereby achieving an improved stability of the material.

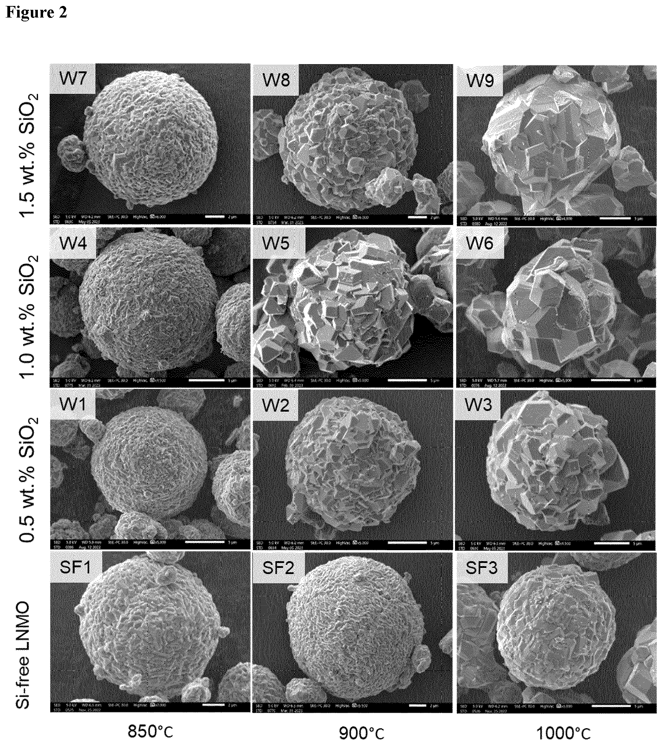

As evident from Fig. 2, a higher SiO₂, content leads to larger size of the crystals. Therefore, with a SiO₂ amount of above 0.5 wt.% based on the total weight of the LNMO material, the secondary particles will be composed of a smaller number of larger crystals, whereas a SiO₂ amount of lower than 0.5 wt.% will lead to secondary particles being composed of a higher number of smaller (primary) crystals. Thus, the properties of the silicon-modified material can be beneficially controlled with the amount of SiO₂ in the silicon-modified material, preferably being above 0.5 wt.%.

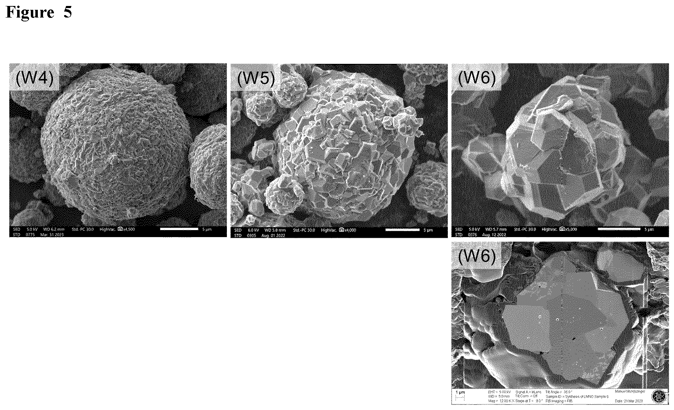

The large and spherical secondary particles of the inventive material result in high tap density and low specific surface area. The low specific surface area of the inventive silicon modified LNMO can further improve cycling stability by reducing oxidative decomposition of the electrolyte and metal-ion dissolution from the cathode material, resulting in a more stable LNMO/electrolyte interface. Further, the particulate material has a high particle density with low porosity. The low porosity is evident from a cross-section of the inventive material (Figure 5(d)).

Therefore, a specific surface area of the LNMO particulate material is preferably between 0.1 and 0.5 m²/g as determined by Brunauer-Emmett-Teller (BET) surface area analysis.

A tap density of the LNMO particulate material according to the invention is typically higher than 2.0 g·cm⁻³ and can reach values close to the theoretical maximum for a packing of spherical particles of the same size of about 3.3 g·cm⁻³ and may be even higher depending on the particle size distribution. Thus, a tap density of the particulate material of the invention preferably is between 2.2 and 3.0, more preferably between 2.4 and 2.8 g·cm⁻³, and is most preferably about 2.6 g·cm⁻³ as determined according to ASTM B527-20.

The inventive silicon-modified LNMO material can beneficially be used as a stable and high-capacity cathode material in Li ion batteries.

### Process for the production of silicon surface modified LNMO particulate material

The inventive Si-modified particulate LNMO material can be obtained by a process in which a particulate LNMO precursor material is mixed with a silicon (Si) source and subsequent calcination. The process can be carried out by a wet, i.e., solution-based process, as well as by a semi-dry (incipient wetness) process in which only a small amount of solvent is used. Instead, a dry process using nano-sized SiO₂ material in the absence of solvents will typically not lead to a homogenous silicon modification of the LNMO particles.

In the wet process the Si source is typically provided as a solution, which is mixed with a solution or slurry of the LNMO precursor in a solvent. This wet process typically comprises the following steps (a) to (d):
(a1) mixing a particulate LNMO precursor with an organic or aqueous solvent,
(a2) providing a solution of an organo silicate in an organic or aqueous solvent,
(b) mixing the LNMO precursor with the solution of the organo silicate, such as an alkyl silicate,
(c) removing the organic or aqueous solvent to obtain a dry mixture,
(d) calcinating the mixture in an oxygen containing atmosphere at a temperature between 850°C to 1100 °C to form silicon surface modified LNMO particulate material.

The semi-dry process typically comprises the following steps (a) to (d):
(a1) providing a particulate LNMO precursor in powder form,
(a2) providing a solution of organo silicate such as an alkyl silicate, in an organic or aqueous solvent,
(b) adding the solution of the organo silicate to the LNMO precursor while mixing,
(c) removing the organic or aqueous solvent to obtain a dry mixture,
(d) calcinating the mixture in an oxygen containing atmosphere at a temperature between 850°C to 1100 °C to form silicon surface modified LNMO particulate material.

The organo silicate is not particularly limited, and may be any silane coupling agent known in the art, such as γ-methacrylic trimethoxysilane (KH-570). Preferably, the organo silicate is an alkyl silicate. The alkyl group of the alkyl silicate can be any alkyl group with 1-8 carbon atoms, such as methyl, ethyl, propyl and/or isopropyl. Most preferably, the alkyl silicate is tetraortho ethylsilicate (TEOS).

The solvent used in step (a1) and/or (a2) is typically ethanol or isopropanol, but may be any solvent suitable for dissolving the organo silicate, e.g., for dissolving TEOS. Since TEOS reacts rapidly with moisture, the solvent is typically an organic solvent and ethanol is most preferably used. However, aqueous solvents, water, or mixture of aqueous and organic solvent may also be used provided that the reaction conditions are adjusted accordingly. Thus, in an alternative embodiment, the solvent may be an aqueous solvent, or it may be water.

In the wet process, the concentration of alkyl silicate solution, such as the TEOS solution, is typically from 15.0 g/l to 200 g/l, and preferably from 60 g/l to 120 g/l. Instead, in the semi-dry process, the concentration of alkyl silicate solution is typically from 3.0 g/l to 110 g/l, and preferably from 16 g/l to 55 g/l. If the concentration of alkyl silicate solution is higher than these upper limits, a uniform distribution of Si on the LNMO surface might not be achieved. If the concentration of the alkyl silicate solution is below these lower limits, the beneficial effects of improved rate stability and electrochemical performance might not be achieved.

Further, in the wet process, the amount of total solvent used per amount of LNMO material is typically from 3.0 to 8.0 l(solvent)/kg(LNMO), preferably from 3.5 to 6.0 l/kg, with an optimal amount of about 4.0 l/kg.

In addition, in the semi-dry process, the amount of total solvent used per amount of LNMO material is typically from 0.5 to 3.0 l(solvent)/kg(LNMO), and preferably from 0.6 to 2.0 l/kg, more preferably from 0.8 to 1.5 l/kg, with an optimal amount of about 1 l/kg.

Steps (a) and (b) are typically carried out at a temperature between 0°C to 70°C, such as at room temperature of 20-25°C, or at a temperature between 40°C and 60°C.

In the semi-dry process, the solution of the alkyl silicate is typically added dropwise to the LNMO powder while mixing to obtain a mud-like, i.e., semi-dry, mixture.

Step (b) typically comprises mixing the organo silicate and the LNMO precursor. Mixing, e.g., under continuous stirring, may be performed for 1-12 hours, such as 2-6 hours, at the above-indicated temperature. In the semi-dry process, the stirring may be continued until the solvent, e.g., ethanol, is completely added.

In the wet process, the solvents are typically removed in step (c) by evaporation at atmospheric pressure or at reduced pressure, such as in a rotary evaporator, e.g., at 100 to 400 mbar. Removal of solvents is typically performed at room temperature, e.g. 20-25 °C, or at elevated temperature, such as between 30°C and 80°C, depending on the solvent(s) used.

Drying is conventionally performed at temperatures higher than the boiling temperature of the solvents used in the process. In case of using ethanol or isopropanol as solvent, drying is typically performed at temperatures between 80°C and 150°C, e.g., between 100°C and 120°C, until complete removal of the solvent is achieved.

In a further preferred embodiment, the process further comprises a pre-calcination step of treating the mixture obtained in step (b) at a temperature between 400°C and 700°C for 2-8 h.

The pre-calcination temperature is typically lower than the temperature used in the subsequent calcination step (d).

The oxygen containing atmosphere in step (d) is typically air, but may be any oxygen containing atmosphere including pure oxygen.

Calcination (step (d)) is typically carried out at a temperature between 850°C and 1100°C, preferably between 850°C and 1000°C, most preferably at about 900°C. During the heat-treatment, the LNMO will crystallize, and the alkali silicate may decompose, and may react with LNMO surface to achieve the Si modification. It has been surprisingly found in the present invention that the size and shape of the silicon-modified particles can be beneficially controlled with the calcination temperature. Moreover, during the heat treatment, the primary crystals grow in size and specific shapes, which results in superior electrochemical performance. As evident from Fig. 2, a higher calcination temperature leads to larger size of the crystals. Therefore, with a calcination temperature of between 900°C and 1100°C, the secondary particles will be composed of a smaller number of larger crystals, whereas a temperature of lower than 900°C, such as between 850 and below 900°C will lead to secondary particles being composed of a higher number of smaller (primary) crystals. Thus, the properties of the silicon-modified material can be beneficially controlled with the calcination temperature.

High temperatures above 900 °C may lead to the formation of oxygen deficient phases. These oxygen deficient phases often contain undesired amounts of NiO or LiₓNi₁₋ₓO (with x typically being from 0 to 0.1) - which indicates partial decomposition of LNMO, which may lead to lower capacity of the resulting particulate material. Subsequent annealing steps at lower temperatures, such as from 600°C to 800°C, preferably from 650°C to 750°C, e.g., about 700°C can lead to a re-integration of the oxygen into the lattice and re-integration of the NiO or LiₓNi₁₋ₓO phases in LNMO with P4₃32 space group, resulting in higher capacities. Further, LNMO with Fd-3m space group may form for Ni-deficient phases, as defined above. Thus, performing an annealing step after the calcination step may be desired.

The calcination is typically performed between 2h and 24h, preferably between 6h and 20h, most preferably between 8h and 16h.

In an alternative embodiment, the process of the present invention involves a lithium (Li)-free precursor material, which is mixed with the silicon source as described above. In this embodiment, the mixture of the Li-free precursor material and silicon source is subsequently treated with a (Li) source.

This alternative process for the production of silicon modified lithium-nickel-manganese-oxide (LNMO) particulate material thus typically comprises the steps of:
(a) mixing a particulate nickel manganese containing precursor material with a solution of an alkyl silicate in an organic or aqueous solvent,
(b) removing the organic or aqueous solvent to obtain a dry mixture,
(c) adding a lithium source (e.g., lithium hydroxide and/or lithium carbonate) to the dry mixture obtained in step (b), and
(d) calcinating the mixture in an oxygen containing atmosphere at a temperature between 850°C to 1100 °C to form silicon surface modified LNMO particulate material.

In this embodiment, a Li-free precursor material may be used. The (typically Li-free) nickel manganese precursor material may comprise a transition metal, i.e., nickel and manganese containing carbonate, oxide or hydroxide, such as a nickel-manganese carbonate, nickel-manganese oxide or nickel-manganese hydroxide, which may contain additional elements, as described above. The precursor material can be obtained by processes basically as described herein below, such as spray drying, hydrothermal or co-precipitation processes. The precursor material is mixed with the silicon source as described above. The resulting mixture is subsequently mixed with a Li source, such as lithium carbonate or hydroxide and calcinated as described above. Thus, with respect to steps (c) and (d), the above description for the inventive process for obtaining the Si-modified particulate material using a Li-containing LNMO precursor material applies in the same way to this alternative embodiment using a (typically Li-free) precursor material, wherein the Li source is only added in a subsequent step after mixing the precursor material with the Si source. Moreover, an additional heat treatment step may be used after step (b), which is typically performed at a temperature in the range of 300-700°C for 4-12 h.

### Preparation of LNMO precursor material

The LNMO precursor material used in the above-described process is not particularly limited and may be obtained by processes described in the art, such as by spray drying, hydrothermal or co-precipitation processes. Co-precipitation is the viable commercial process with benefits such as scalability, allowing for control of particle size and particle morphology, and low cost, and thus is preferably used for preparing the LNMO precursor material.

In addition to these methods, combined processes are described in which a precursor, e.g., a transition metal carbonate, oxide or hydroxide, is produced by co-precipitation, which is then reacted with stoichiometric amounts of a lithium compound to give the end product. Co-precipitation can be performed with or without an additional low temperature heating step at a temperature typically between 300 and 600 °C. Such a low temperature heating step may be desired to form oxides. In lithium-ion battery materials, coprecipitation is currently widely used to produce transition metal hydroxide precursors. However, co-precipitation processes using carbonate precursors can be used alternatively.

For example, the LNMO precursor material can be obtained by a batch-wise or continuous co-precipitation process.

A continuous co-precipitation process is described, for example, in DE 10 2023 116 756.1. In a first process step, an aqueous solution of a transition metal salts may be continuously mixed with an aqueous solution of a carbonate in the presence of an aqueous solution of an organic additive in a continuous stirred tank reactor. The continuous mixing results in the continuous precipitation of the transition metal carbonate in the reactor. The precipitated transition metal carbonate is therefore present as a solid suspension in the reactor and can be continuously removed.

In a preferred embodiment, the co-precipitation process comprises the steps of:
(i) providing a solution comprising ammonia, manganese salt and nickel salt to obtain a Nickel-Manganese-Hydroxide precursor.
(ii) mixing the Nickel-Manganese-Hydroxide precursor with lithium hydroxide, and
(iii) calcination in an oxygen containing atmosphere at temperature between 400°C to 900°C for 6-20 h.

The manganese salt and/or nickel salt are not particularly limited, and can be any salt with sufficient aqueous solubility to be present as a solution under the reaction conditions applied during the co-precipitation process. Typically, at least one of the manganese salt and the nickel salt is a nitrate or sulfate salt, with the nitrate salt being particularly preferred.

Nickel and Manganese salts are typically used in a ratio to achieve a stoichiometry of Mn/Ni of between 4:1 and 2:1, such as about 3:1. Alternatively, Nickel and Manganese salts are typically used in a ratio to achieve a stoichiometry of Ni_{0.5-x}Mn_{0.5+x}, wherein x is between 0 and 0.6.

A typical process involves impregnation of LNMO precursor material, e.g., hydroxide precursor, which may be obtained from e.g. Ni_{0.25}Mn_{0.75}(OH)₂ with LiOH, such as LiOH·H₂O, and heating at temperatures between 400°C to 700°C, e.g. at about 450°C, for 2-10h, such as about 6 h and referred to as LNMO precursor in the process for the production of silicon modified LNMO material. In a preferred embodiment, an alkyl silicate, such as TEOS, is provided as an ethanolic solution, and is added to the LNMO material. The material mixture may be heated to 700 - 1100°C, most preferably at about 850°C for 6 h-16 h, such as about 12 h.

The LNMO precursor material obtained by the above-described processes is preferably a particulate material comprising spherical particles having a D₅₀ particle size between 4 µm and 30 µm, preferably between 7 µm and 20 µm.

Thus, in a further aspect, the present invention provides a silicon modified, such as a SiO₂ modified LNMO material obtainable by the processes described herein, preferably obtainable by a co-precipitation process as described herein.

### Description of Figures

**Figure 1****:** Schematic presentation of a silicon modified LNMO secondary particle being composed of crystals and crystallites.
**Figure 2****:** SEM images for silicon-free LNMO (SF1-SF3) and silicon modified LNMO (W1-W9) materials with different primary crystal sizes obtained under varying process conditions.
**Figure 3****:** XRD patterns for the Si-free LNMO (SF2) & silicon modified LNMO (W5) LNMO material.
**Figure 4****:** SEM images and elemental mapping for (a) Si-free LNMO (SF2), (b-c) silicon modified LNMO (W5).
**Figure 5****:** SEM images for silicon modified LNMO materials (W4-W6) with different primary crystal sizes and cross-section of a Si-LNMO (W6) secondary particle.
**Figure 6****:** Illustration of a comparison of the rate capability performance for Si-free LNMO (SF2) and silicon modified LNMO (W5) in half-cells (LNMO vs. Li/Li⁺): (a) Rate capability, (b) cycling performance comparison, (c-d) galvanostatic charge/discharge curves of Si-free LNMO (SF2) & Si-LNMO (W5).
**Figure 7****:** Comparison of the cycling performance of Si-free LNMO (SF2) and silicon modified LNMO (W5) in full-cell configuration (LNMO vs. graphite) at room temperature (25°C).
**Figure 8****:** Elevated temperature (45°C) cycling for Si-free LNMO (SF2) and silicon modified LNMO (W5) in full-cell configuration (LNMO vs. graphite).
**Figure 9****:** Illustration of a comparison of the rate capability performance for Si-free LNMO (SF2) and Si-modified LNMO using wet (W5) and semi-dry coating (SD1) process in half-cells (LNMO vs. Li/Li⁺)).
**Figure 10****:** Comparison of charge/discharge curves of Si-modified LNMO using the wet (W5) and semi-dry (SD1) coating processes.
**Figure 11****:** Illustration of a comparison of the cycling performance for Si-free LNMO (SF2) and Si-modified LNMO using wet (W5) and semi-dry (SD1) coating process in full-cells (LNMO vs. graphite).

### Examples

In the following, the present invention is further illustrated and described by non-limiting experimental examples.

The table below shows the acronyms used for the Si-free LNMO materials, and Si-modified materials synthesized using wet coating process, and semi-dry process, as described in the following examples. The numbers next to the acronyms refer to different samples synthesized using similar processing method but under different synthesis conditions (temperature or degree of Si-modifications).

| **Process/Material** | **Acronyms** | **Samples** |
|---|---|---|
| Si-free LNMO | SF | SF1-SF3 |
| Wet coating process | W | W1-W9 |
| Semi-dry process | SD | SD1 |

### Example 1 - Precursor synthesis

A high density LiNi_{0.5}Mn_{1.5}O₄ (LNMO) was synthesized using two-step process, (1) precursor synthesis, (2) lithiating the precursor. Initially, the precursor Ni_{0.25}Mn_{0.75}(OH)₂ was synthesized using a co-precipitation technique within a continuous stirred tank reactor (CSTR). This involved the utilization of aqueous solutions containing ammonia, nickel, and manganese nitrates, maintaining a Mn/Ni ratio of 3/1. The co-precipitation process yielded dense spherical particles of micron-scale dimensions. Later, the synthesized precursors were mixed with lithium hydroxide and underwent a low temperature annealing at 450°C for a duration of 6 hours within an ambient air environment. Later, this LNMO precursor material was used to prepare the Si-free LNMO and Si-modified LNMO materials.

### Example 2 - Silicon treatment

### 2.1 Wet coating approach

Firstly, 90ml of ethanol was transferred to a beaker (solution 1) and heated to 50°C with continuous stirring. Later, 15 gram of LNMO precursor was added to solution 1. Here LNMO precursor refers to the LNMO material which was synthesized by mixing Ni_{0.25}Mn_{0.75}(OH)₂ precursor and LiOH and heat treated at 450°C for 6 h. In the meantime, 30 ml of ethanol was added to another beaker (solution 2) at 50°C and stirred for 30 minutes. Later, tetraethyl orthosilicate (TEOS), corresponding to the targeted amounts of Si in Si-LNMO, was added to solution 2 and stirred for further 30 minutes. Finally, the TEOS solution (solution 2) was added to solution 1 dropwise. The temperature was increased to 60°C and the LNMO/TEOS was left for stirring for around 6 hours. Later, the solution was transferred to rotary evaporator (Büchi) for the removal of ethanol solution. The temperature of the rotary evaporator bath was set to be 60°C and 350mbar pressure was applied for the ethanol removal. Later, the LNMO/TEOS was transferred to the drying oven set at 120°C for overnight. Finally, the LNMO/TEOS was heat treated at different temperatures (850, 900, 1000°C) to synthesize Si-LNMO materials. For Si-free LNMO materials, LNMO was simply heat treated at 850, 900, 1000°C.

### 2.2 Semi-dry (incipient wetness) approach

Initially a solution of tetraethyl orthosilicate (TEOS) in ethanol was prepared by adding TEOS to ethanol with continuous stirring at 50°C for 30 minutes, yielding a TEOS solution with a concentration of around 35 g/l. The TEOS amount was adjusted between 18 and 52 g/l to meet the desired silicon (Si) content for Si-modified LNMO materials. Moreover, the amount of total solvent used per amount of LNMO material was 1 l/kg. Concurrently, 15 grams of LNMO precursor material were placed in a mortar and pestle. Here LNMO precursor refers to the LNMO material which was synthesized by mixing Ni_{0.25}Mn_{0.75}(OH)₂ precursor and LiOH and heat treated at 450°C for 6 h. Subsequently, the TEOS/ethanol solution was carefully added dropwise to the dry LNMO material while stirring continuously, ensuring the even distribution of TEOS on the LNMO particles. This process resulted in a clay-like material. The LNMO/TEOS mixture was then dried in an oven at 120°C overnight, removing the solvent. Finally, the LNMO/TEOS underwent heat treatment at various temperatures (850, 900, and 1000°C) to synthesize Si-modified LNMO materials, enabling the desired modifications. For Si-free LNMO materials, LNMO was simply heat treated at 850, 900, 1000°C.

### Example 3 - XRD measurement of Si modified LNMO material

LNMO materials prepared in Examples 2.1 and 2.2 were analysed by XRD measurements and SEM elemental mapping.

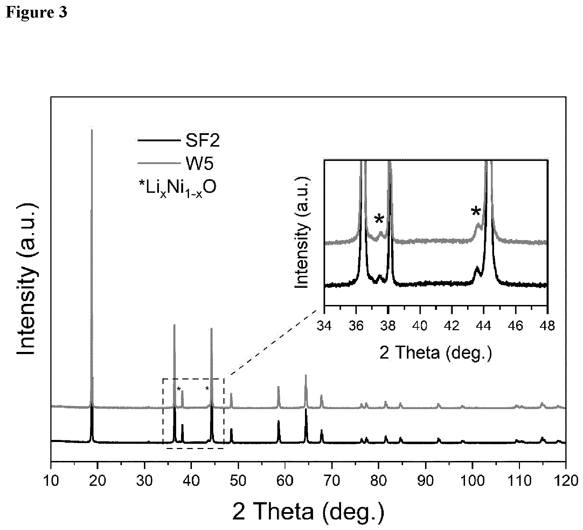

**Figure 3** illustrates the XRD patterns for both Si-free LNMO (SF2) and silicon modified LNMO materials, which can be indexed to the Fd3m cubic phase, also known as disordered spinel in literature. Small amounts of NiO or LiₓNi₁₋ₓO was detected in both materials, which is typically found in disordered LNMO materials due to nickel or oxygen deficiency.

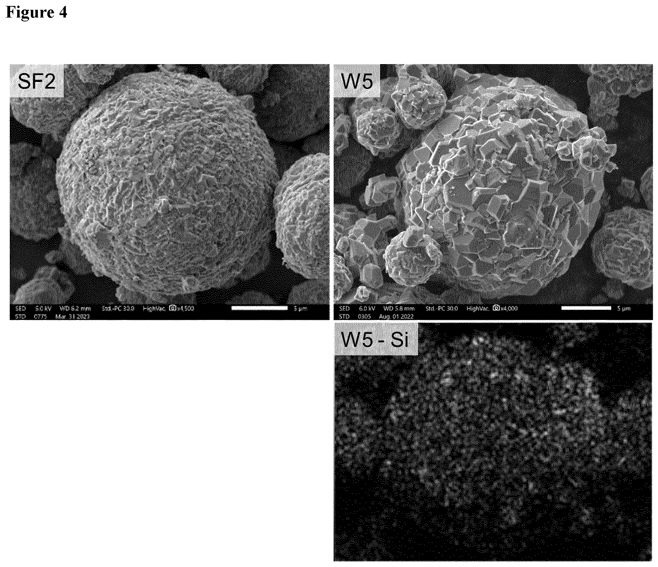

**Table 1** presents the ICP results for the Si-free LNMO (SF2) and Si-LNMO materials (W5), which confirms almost stoichiometric composition (Mn/Ni ≈ 3/1). The Si-free LNMO and Si-LNMO materials display a spherical morphology with micron-sized secondary particles, with D₅₀ around 14 µm and 16.5 µm respectively **(****Figure 4****).**

**Table 1: ICP analysis results of Si-free LNMO & Si-modified LNMO (Si-LNMO).**

| **Sample** | **Li** | **Ni** | **Mn** | **Si** |
|---|---|---|---|---|
| SF2 | 1.030 | 0.499 | 1.501 | - |
| W5 | 1.029 | 0.497 | 1.503 | 0.0064 |

Elemental mapping confirms homogeneous distribution of Si on the particle surface. The crystallite size for Si-free LNMO was approximately 200 nm, while for Si modified LNMO it was 285 nm (which could be controlled), with the lattice parameter and cell volume slightly increased for Si-LNMO. Refinement parameters and particle size are listed in **Table 2.**

**Table 2: Rietveld refinement parameters and particle size distribution of Si-free LNMO & Si-modified LNMO (Si-LNMO).**

| **Sample** | **Lattice Constant a (Å)** | **Cell volume (Å³)** | **Crystallite size (nm)** | **Strain** | **Particle size (µm)** |
|---|---|---|---|---|---|
| Ordered LNMO (Si-free)* | 8.16863 | 545.065 | 116 | 0.4534 | 12.0 |
| Ordered Si-modified | 8.16894 | 545.125 | 365 | 0.0785 | 16.7 |
| SF2 | 8.17502 | 546.345 | 263 | 0.2137 | 14.0 |
| W5 | 8.17670 | 546.681 | 297 | 0.1926 | 16.6 |
| SD1 | 8.17786 | 546.914 | 270 | 0.2022 | 16.5 |

| | | | | | |
|---|---|---|---|---|---|
| * comparative material used for reference purposes | | | | | |

In addition, the primary particles of Si-LNMO transformed into well (truncated) octahedral shape **(**Figures 4, 5), which is known to enhance electrochemical performance by providing more stable surfaces. **Figure 4** shows SEM images and elemental mapping for (a) Si-free LNMO, (b) Si-LNMO. Moreover, with controlling the synthesis conditions (calcination temperature and Si concentration), the size of the primary crystals can be controlled as shown in **Figure 5****.** Therefore, the physical and electrochemical properties of Si-LNMO can be controlled over wide range.

The larger secondary particles resulted in high tap density and low specific surface area (0.2 m² g⁻¹ for Si-LNMO). The lower specific surface area of Si-LNMO can further improve cycling stability by reducing oxidative decomposition of the electrolyte and metal-ion dissolution from the cathode material, resulting in a more stable LNMO/electrolyte interface.

### Example 4 - Electrochemical results

The electrochemical performance of the Si modified LNMO materials prepared in Examples 2.1 and 2.2 were analysed by measuring the rate capability performance, cycling performance, and galvanostatic charge/discharge curves in both half-cell (LNMO cs. Li/Li⁺) and full-cell (LNMO vs. graphite) configurations.

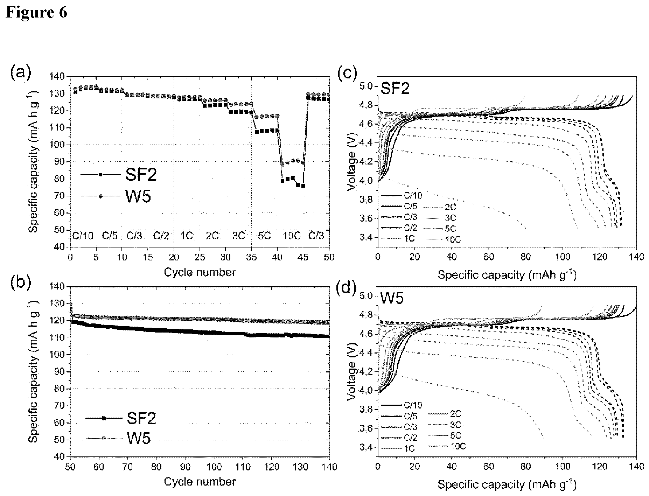

**Figure** 6 illustrates a comparison of the rate capability performance for Si-free LNMO and Si-LNMO. All electrochemical measurements were conducted using a conventional electrolyte LP30 (1M LiPF₆ EC:DMC 1: 1 wt.%) without any stabilising additives. Active material loadings were between 9-10 mg cm⁻². All measurements were performed in coin-cell (CR2023) configuration. Lithium metal (450µm) was used as a counter electrode, and two glass-fibre sheets were used as a separator. For all cells, 150 µl of electrolyte was used, and all half-cell measurements were performed at 25°C.

Both materials exhibit almost similar rate performance up to C/2. However, at higher C-rates, Si-LNMO demonstrates superior rate performance. At 5C and 10C, Si-LNMO exhibits discharge capacities of around 118 and 90 mAh g⁻¹, respectively. On the other hand, Si-free LNMO can only retain 103 and 77 mAh g⁻¹ at 5C and 10C, respectively. Furthermore, Si-LNMO shows superior cycling performance at 1C/1C when compared to Si-free LNMO. Both Si-free and Si-LNMO exhibit a capacity of around 118 and 123 mAh g⁻¹, respectively. After 140 cycles, the Si-free and Si-LNMO exhibit capacity retention of around 94% and 98%, respectively. The charge/discharge curves indicate that Si-LNMO has a slightly higher Mn³⁺ content. Additionally, Si-LNMO show lower over potentials compared to Si-free LNMO, particularly at higher C-rates, which can be related to improved kinetics with Si modification.

The materials were also tested in full-cell configuration (LNMO/graphite) to compare the influence of Si modification on the long-term stability in full-cells. Full-cells were also tested in coin-cell (CR2032) configuration. The measurements were conducted using the conventional electrolyte LP30 (1M LiPF₆ EC:DMC 1: 1 wt.%) as were done for the half-cells. Active material loadings for the LNMO cathode were between 18-19 mg cm⁻². Graphite was used as an anode with an active material loading of around 8.9 mg cm⁻² (3 mAh cm⁻²). The N/P ratio was set to be around 1.2. Again, two sheets of glass fibre were used as a separator, and 150 µl of the electrolyte was used for all cells.

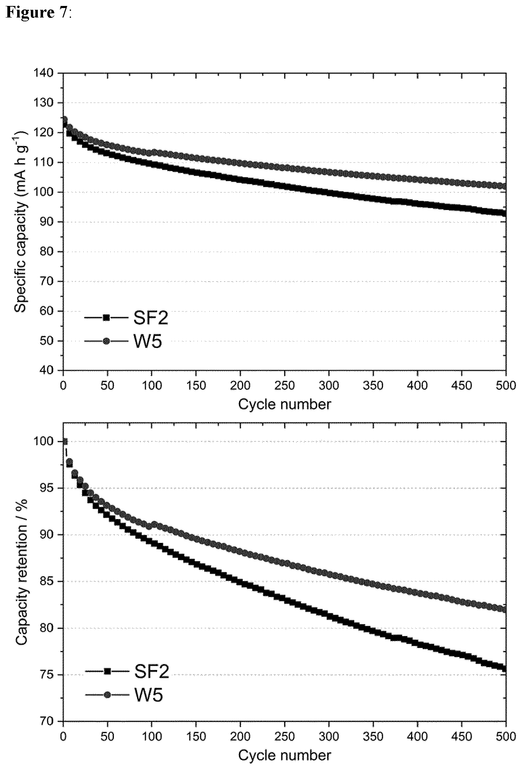

The cycling stability was analysed at both 25 and 45°C. **Figure 7** compares the cycling performance of Si-free and Si-LNMO at 25°C. Results indicate that Si-LNMO exhibits better capacity retention compared to Si-free LNMO after 500 cycles. Specifically, Si-free LNMO and Si-LNMO retained approximately 75.14% and 84.5% of their initial capacity after 500 cycles, respectively.

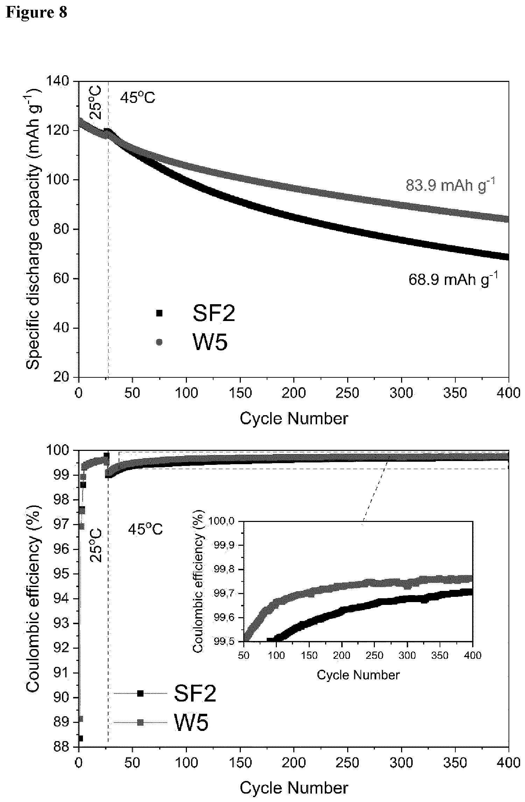

LNMO/graphite full-cells were also tested at elevated temperature (45°C). During the initial cycles, both materials exhibited similar capacity decay as a result of aggressive electrolyte decomposition and consumption of active lithium. However, Si-LNMO demonstrated slower capacity fade with further cycling, as shown in **Figure 8****.** Remarkably, Si-LNMO showed excellent cycling stability when cycled at 45°C. The Si-free and Si-LNMO could be cycled for 96 and 196 cycles, respectively, to reach 80% SOH. Additionally, Si-LNMO exhibited higher coulombic efficiency (CE), which directly impact the capacity retention. The Si modification is expected to hinder the direct contact between the LNMO interface and electrolyte, thereby reducing the occurrence of electrolyte decomposition (side reactions) and ultimately improving capacity retention.

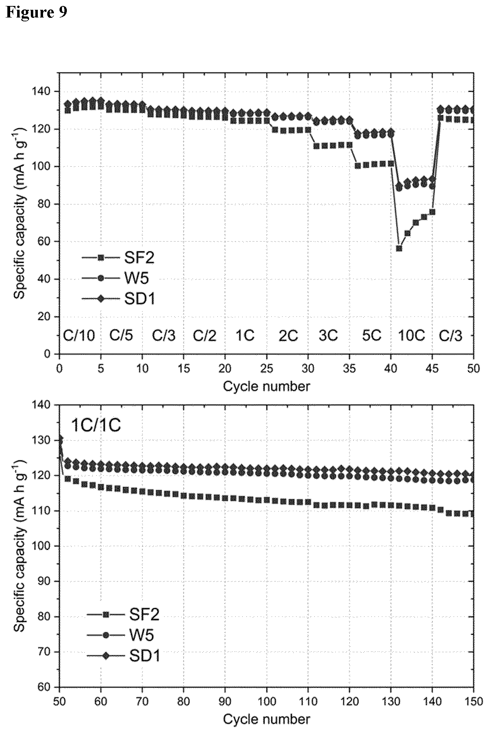

**Figure** 9 shows the comparison of rate capability performance for the Si-free LNMO (SF2), Si-modified LNMO with wet process (W5) and semi-dry process (SD1). Si-modified LNMO materials, both synthesized using wet coating and semi-dry process show enhanced performance when compared to the Si-free LNMO material. All materials perform very similar till C/2 giving a discharge capacity of around 126 mAh g⁻¹, however, at higher C-rates, the wet coating and semi-dry Si-modified materials outperforms the Si-free LNMO material. The semi-dry and wet coating material performs exactly same considering the standard deviations from more than 3 cells tested. The wet coating and semi-dry Si-modified materials retain a capacity of around 120 mAh g⁻¹ and 90 mAh g₋₁ at 5C and 10C respectively, whereas the Si-free material only retains a discharge capacity of around 100 mAh g-1 and 78 mAh g-1 respectively. Furthermore, it can be clearly seen from the cycling data in Figure 9(b) that the Si-free LNMO show lower capacity and faster capacity degradation when compared to the Si-modified LNMO materials.

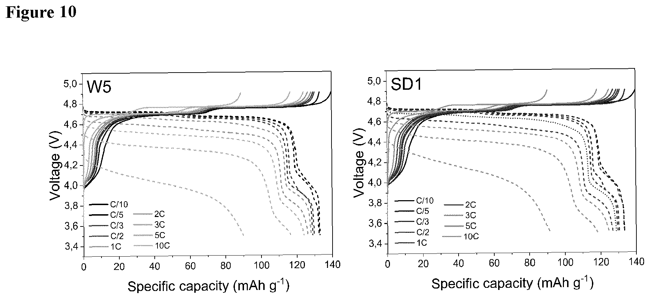

**Figure 10** compared the charge/discharge curves of the Si-modified LNMO materials synthesized using wet coating (W5) and semi-dry coating process (SD1). Si-modified LNMO materials synthesized using wet coating and semi-dry coating process show almost similar charge/discharge profiles at different C-rates. The capacity delivered by 4.0 V plateaus for both materials are also similar, since this is related to the amount of Mn³⁺ present in the LNMO materials. Since, both materials were synthesized under similar conditions, and both show similar low voltage (4.0 V) discharge capacity, therefore, it appears that both have similar amount of Mn³⁺ present.

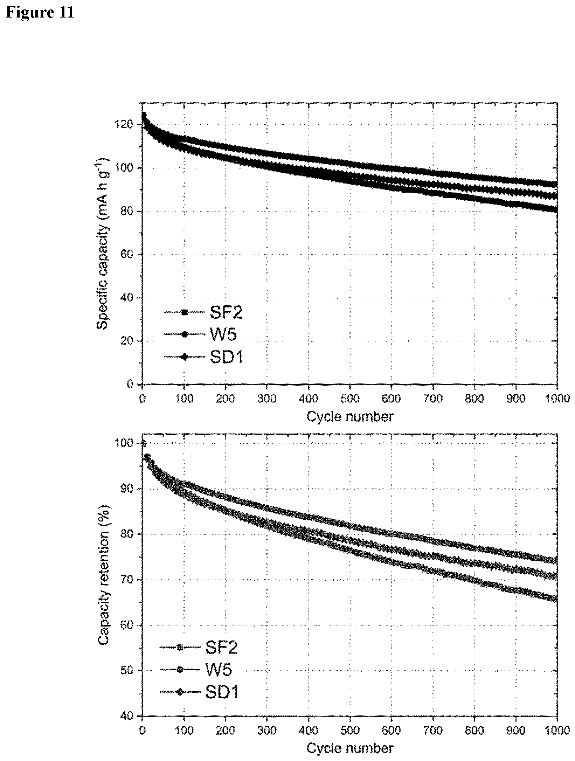

**Figure 11** compares the full-cell (LNMO vs. graphite) performance of Si-free LNMO (SF2), wet coating (W5) and semi-dry process (SD1). It is found that in full-cells, the Si-modified LNMO materials using wet process show the best capacity retention. The Si-free LNMO show fastest capacity fade. However, for the Si-modified LNMO material by semi-dry process, there is considerable improvement in capacity retention when compared to the Si-free LNMO material, however lesser than wet coating process. The best capacity retention of Si-modified by wet coating might be due to homogenous coating layer present on the LNMO material, when compared to semi-dry process. The Si-free LNMO and semi-dry Si-modified LNMO materials 71% and 75 % of their initial discharge capacity after 1000 cycles using C/2-1C cycling protocol.

In summary, it could be experimentally shown that by Si-modification of LMNO material, the stability of the material in half and full cells could be significantly improved. Major improvements were obtained in full-cell configuration (LNMO/graphite) at elevated temperatures (45°C), which is the main criterion for LMNO stability assessment. Thus, the new Si modified LNMO material according to the invention shows significantly improved stability due to silicon treatment, specific primary particle shape and design. Compared to Si-free LNMO, Si modified LNMO demonstrates superior rate capability, long-term cycling in full-cell (LNMO/graphite), and a relatively stable LNMO/electrolyte interface.

## Claims

1. Lithium-Nickel-Manganese-Oxide (LNMO) particulate material, wherein the LNMO particulate material comprises secondary particles,
wherein the secondary particles are composed of a multitude of crystals, and said crystals are composed of a multitude of crystallites,
wherein a D₅₀ particle size of the secondary particles is between 4.0 µm and 25 µm, as measured by laser diffraction according to ISO 13320:2020, and
wherein a D₅₀ particle size of the crystals is between 0.5 µm and 7.0 µm as measured by scanning electron microscope (SEM), and
wherein, the LNMO particulate material is silicon modified.

2. LNMO particulate material according to claim 1, wherein the D₅₀ particle size of the secondary particles is between 5.0 µm and 20 µm as measured by laser diffraction according to ISO 13320:2020.

3. LNMO particulate material according to claim 1 or 2, wherein a D₅₀ particle size of the crystals is between 1.0 µm and 5.0 µm as measured by SEM.

4. LNMO particulate material according to any one of the preceding claims, wherein a crystallite size is between 180 nm to 400 nm as measured by XRD Rietveld refinement.

5. LNMO particulate material according to any one of the preceding claims, wherein the silicon modification comprises SiO₂.

6. LNMO particulate material according to any one of the preceding claims, wherein a molar ratio of Si/(Ni+Mn) is between 0.0005-0.03.

7. Use of the LNMO particulate material according to any one of the preceding claims as a cathode material in Li ion batteries.

8. Process for the production of silicon modified Lithium-Nickel-Manganese-Oxide (LNMO) particulate material, the process comprising the steps of:
(a) mixing a particulate LNMO precursor with a solution of an alkyl silicate in an organic or aqueous solvent,
(b) removing the organic or aqueous solvent to obtain a dry mixture,
(c) calcinating the mixture in an oxygen containing atmosphere at a temperature between 850°C to 1100 °C to form silicon modified LNMO particulate material.

9. Process according to claim 8, wherein the alkyl silicate is tetraethyl ortho silicate (TEOS).

10. Process according to claim 8 or 9, wherein the process further comprises a pre-calcination step of treating the mixture of step (b) at a temperature between 400°C and 700°C for 2-8 h.

11. Process according to any one of claims 8-10, wherein the organic solvent is ethanol or isopropanol.

12. Process according to any one of claims 8-11, wherein calcination step (c) is performed at a temperature between 850°C and 1000°C and is performed between 6h and 20h.

13. Process according to any one of claims 8-12, wherein mixing in step (a) is carried out at a temperature between 25°C and 60°C.

14. Silicon modified LNMO material obtainable by the process according to any one of claims 8-13.
